Europäisches Patentamt

European Patent Office

Office européen des brevets

(19)

(11) **EP 0 588 739 B1**

(12) **FASCICULE DE BREVET EUROPEEN**

(45) Date de publication et mention
de la délivrance du brevet:
**03.12.1997 Bulletin 1997/49**

(51) Int Cl.6: **G01M 19/00**, G01N 25/00

(21) Numéro de dépôt: **93450007.5**

(22) Date de dépôt: **09.09.1993**

(54) **Procédé d'essai thermomécanique par simulation d'un bouclier thermique ou analogue et dispositif pour sa mise en oeuvre**

Verfahren und Vorrichtung zur thermomechanischen Prüfung durch Simulation eines Hitzeschildes oder dergleichen

Procedure and device for the thermomechanical testing through simulation of a heat shield or the like

(84) Etats contractants désignés:
**CH DE GB IT LI NL**

(30) Priorité: **14.09.1992 FR 9211115**

(43) Date de publication de la demande:
**23.03.1994 Bulletin 1994/12**

(73) Titulaire: **AEROSPATIALE Société Nationale Industrielle**
**75781 Paris Cédex 16 (FR)**

(72) Inventeurs:
• **Lecluse, Serge**
**F-33160 Saint Médard en Jalles (FR)**

• **Teychene, Christian**
**F-33700 Mérignac (FR)**

(74) Mandataire: **Thébault, Jean-Louis**
**Cabinet Thébault**
**111 cours du Médoc**
**33300 Bordeaux (FR)**

(56) Documents cités:
• **SOVIET INVENTIONS ILLUSTRATED Week 9006, 21 Mars 1990 Derwent Publications Ltd., London, GB; AN 90-043044 & SU-A-1 495 696 (LENGD REFRIG IND) 23 Juillet 1989.**

## Description

La présente invention a trait à un moyen d'essai permettant la simulation des conditions thermomécaniques en particulier d'un bouclier thermique de protection d'une sonde spatiale lors de sa pénétration dans l'atmosphère d'une planète, afin d'étudier le comportement du bouclier et ses capacités de résistance.

Un tel bouclier a une forme générale de calotte mince à bord circulaire, d'un diamètre de plusieurs mètres, dans la partie centrale de la face concave de laquelle sont regroupés et fixés les divers équipements de la sonde.

Lors d'une telle pénétration dans l'atmosphère, le bouclier de protection est soumis sur sa face externe convexe à des sollicitations à la fois thermiques et mécaniques.

La face externe du bouclier est soumise à un flux thermique dont l'intensité locale est fonction de l'abscisse curviligne du bouclier et du temps, ainsi qu'à une surpression due à l'onde de pression de l'atmosphère sur le bouclier.

La pression locale sur la face externe du bouclier est également fonction de l'abscisse curviligne du bouclier et du temps et la différence de pression exercée sur les faces opposées du bouclier engendre sur le pourtour de celui-ci, qui est libre, un débattement d'amplitude variable, également fonction du flux thermique qui contribue à déformer le bouclier.

Les techniques actuelles visant à simuler les conditions thermomécaniques vécues par les structures du type bouclier, lors des phases propulsées ou de rentrée dans l'atmosphère, consistent à appliquer simultanément des contraintes de température et mécaniques sur les structures.

Pour ce qui concerne les contraintes thermiques, la structure ou une maquette est soumise à un flux thermique qui est uniquement fonction du temps et non de l'endroit de la structure ou de la maquette.

Quant aux contraintes mécaniques, elles sont appliquées sous forme d'efforts mécaniques exercés de manière statique par des vérins sur la structure ou la maquette et sous forme de pressions internes à la structure ou à la maquette, généralement par un moyen hydraulique, ou de pressions externes à la structure ou à la maquette, par exemple à l'aide de vessies enveloppantes calées par des caissons externes à l'objet à tester.

De telles techniques d'essai appliquées à une structure du type bouclier thermique obligent à brider, par l'outillage d'essai, la périphérie du bouclier, ce qui entraîne un encastrement quasi parfait de la structure dans le dispositif d'essai.

De tels essais ne constituent pas une réelle simulation car ils ne reproduisent pas les conditions réelles d'évolution du flux thermique d'un bouclier pénétrant dans l'atmosphère et les conditions de travail, notamment de la périphérie du bouclier soumis au débattement évoqué plus haut.

Le but de l'invention est précisément de pallier les inconvénients des techniques d'essai par simulation connues, en proposant une technique d'essai apte à simuler de manière plus fidèle les effets thermiques et de surpression externe auxquels est sujet un bouclier thermique de protection d'une sonde spatiale, ou d'une structure appelée à affronter de semblables conditions, lors de la pénétration dans une atmosphère terrestre ou autre.

A cet effet, l'invention a pour objet un procédé d'essai thermomécanique par simulation d'un bouclier thermique, caractérisé en ce qu'il consiste :

- à agencer le bouclier en sorte de constituer par sa face externe convexe une partie de la paroi interne d'une enceinte fermée, en laissant un intervalle libre entre le bord périphérique dudit bouclier et la partie environnante en regard de l'enceinte,

- à solidariser le bouclier de l'enceinte par un moyen relié au bouclier par sa face interne, dans sa partie centrale,

- à envoyer dans l'enceinte un fluide sous pression contrôlée,

- à appliquer simultanément sur la face externe convexe du bouclier un flux thermique contrôlé, évolutif le long de l'abscisse curviligne, et

- à commander l'évolution dans le temps de la pression dudit fluide et les variations en puissance et dans le temps dudit flux thermique en fonction d'un programme pré-établi.

Avantageusement, durant toute la durée du programme d'essai, on contrôle les fuites au droit dudit intervalle entre bouclier et enceinte, à des fins de contrôle de la pression effective dans l'enceinte.

Suivant un mode de mise ne oeuvre, le contrôle desdites fuites est opéré par une détection d'écart entre la pression instantanée de consigne et la pression réelle dans l'enceinte et une action sur le débit du fluide en vue de ramener ledit écart en deçà d'un seuil prédéterminé.

De préférence, le contrôle desdites fuites est opéré, suivant un autre mode de mise en oeuvre, en agençant entre le rebord périphérique du bouclier et la partie environnante en regard de l'enceinte, un moyen apte à conserver une section de fuite sensiblement constante au droit dudit rebord périphérique en dépit du mouvement de débattement de ce dernier.

Ledit moyen apte à conserver une section de fuite sensiblement constante est une pièce solidaire de l'enceinte, de forme annulaire et entourant le bouclier ou analogue et présentant en regard du bord de ce dernier une face concave en sorte que ledit bord demeure sensiblement à distance constante de ladite face concave.

Un tel procédé permet d'obtenir des conditions thermiques analogues aux conditions réelles et une surpression sur la face externe convexe du bouclier par un écoulement de fluide également analogue à ce qui se passe en réalité, avec un bouclier qui peut prendre tous les degrés de liberté, c'est-à-dire de déflexion au droit de sa périphérie tout en procurant en outre l'avantage d'éliminer les fumées et gaz consécutifs aux sollicitations thermiques.

L'invention a également pour objet un dispositif pour la mise en oeuvre du procédé ci-dessus, dispositif qui va maintenant être décrit en référence au dessin annexé sur lequel :

- Figure 1 est un schéma représentant un bouclier thermique de protection de sonde dans les conditions de rentrée en atmosphère terrestre, et
- Figure 2 est une vue schématique en coupe axiale verticale d'un mode de réalisation préféré d'un dispositif d'essai, selon le procédé de l'invention, d'un bouclier du type de la figure 1.

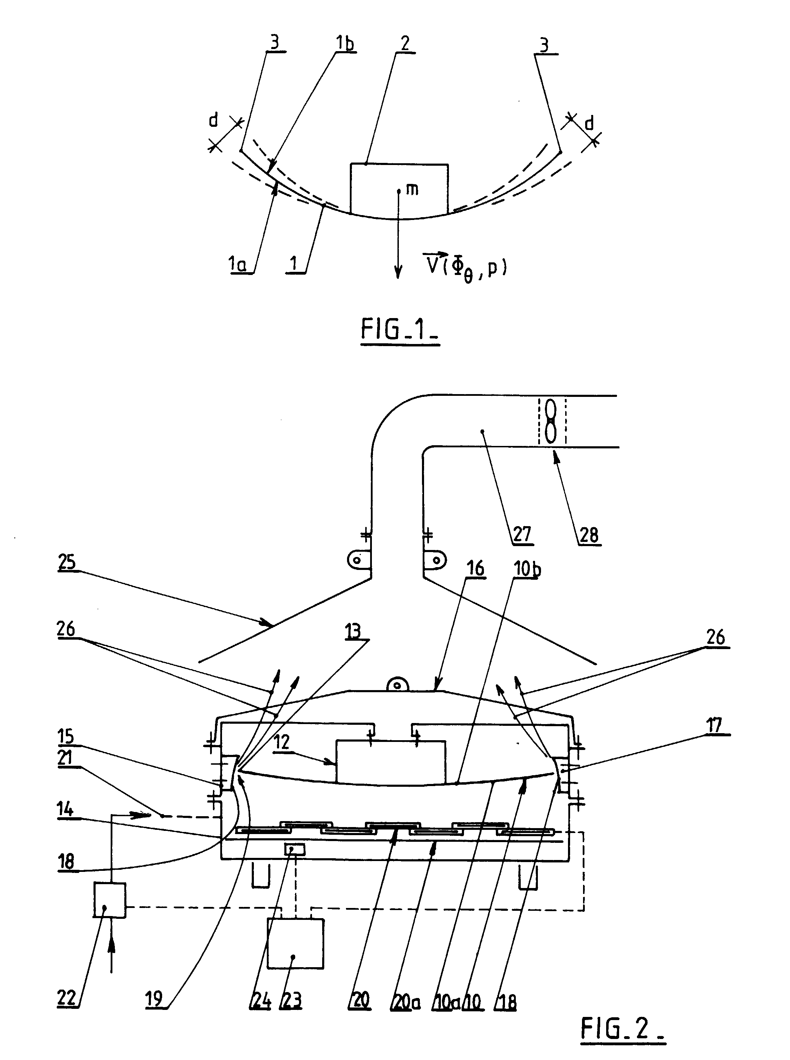

Sur la figure 1, on a représenté très schématiquement en coupe axiale un bouclier thermique 1 de protection en forme de calotte mince à bord circulaire. La structure de ce bouclier 1 est par exemple du type décrit dans la demande de brevet français N° 90 05260 déposée le 23 avril 1992 au nom de la Demanderesse.

Le bouclier comporte sur sa face interne concave les équipements d'une sonde symbolisés en 2, regroupés dans la partie centrale du bouclier et fixés à ce dernier. Les bords du bouclier 1, tout autour des équipements 2 sont, sur une partie substantielle dudit bouclier, libres, en sorte que, dans les conditions par exemple de rentrée dans l'atmosphère terrestre, l'ensemble bouclier 1 - équipements 2 se déplace à une vitesse symbolisée par le vecteur $\vec{V}$ appliqué au centre de gravité m de l'ensemble et fonction du flux thermique $\phi_\theta$ et de la pression p exercée par l'atmosphère.

La face externe convexe 1a du bouclier est soumise audit flux thermique engendré par le frottement des molécules gazeuses sur le bouclier et à ladite pression exercée par ces dernières, cependant que la face interne concave 1b, dans la zone libre du bouclier 1, n'est pas soumise directement à ces contraintes thermomécaniques.

Il s'ensuit notamment, au cours de la traversée de l'atmosphère, un mouvement de débattement de ladite partie périphérique libre du bouclier, indiqué par des flèches doubles d au droit du bord périphérique 3 du bouclier.

Le procédé de l'invention vise à reproduire à terre de semblables conditions de sollicitations thermomécaniques sur un bouclier-test.

La figure 2 illustre un mode de mise en oeuvre préféré du procédé de l'invention.

Sur cette figure 2, on a représenté en 10 un bouclier de protection thermique, du type illustré par la figure 1, c'est-à-dire en forme de calotte à bord circulaire mince à rayon de courbure relativement important, d'un diamètre compris entre 1 et 4 m par exemple et sur la face interne concave 10b de laquelle sont regroupés en 12 les équipements de la sonde ou tout au moins une maquette de simulation des équipements.

Conformément à l'invention, le bouclier 10 est agencé en sorte de constituer par sa face externe convexe 10a une partie d'une enceinte d'essai fermée, en laissant un intervalle libre entre le bord périphérique 13 du bouclier 10 et la partie environnante en regard de ladite enceinte.

A cet effet, il est prévu, dans le mode de réalisation illustré par la figure 2, une cuve cylindrique fixe 14, surmontée d'une virole amovible 15 à hauteur de laquelle, intérieurement, est disposé le bouclier 10 en position à l'horizontale, avec sa face externe convexe 10a tournée vers le fond de la cuve 14.

Le bouclier 10 est suspendu à une poutre transversale 16 fixée, d'une part, à la partie équipements 12 du bouclier et, d'autre part, à ses extrémités, sur la virole 15.

Entre le bord périphérique 13 du bouclier et la face interne de la virole 15 est agencée une pièce 17 en forme de coin annulaire, fixée de manière amovible et réglable à la virole 15 et présentant en regard dudit bord périphérique 13 une face 18 de forme sensiblement concave, approximativement sphérique, agencée de façon à ménager entre ladite face 18 et ledit bord 13 un intervalle annulaire 19, dit de fuite, sensiblement constant, quelle que soit l'amplitude du débattement du bord périphérique 13, consécutif aux déformations que va subir le bouclier lors des essais.

A l'intérieur de la cuve 14, en regard de la face convexe externe 10a est agencé un dispositif de chauffage approprié 20 disposé de façon à couvrir toute la surface du bouclier et à permettre d'appliquer à ladite face 10a un flux thermique variable en fonction de l'abscisse curviligne de la face convexe 10a. Un réflecteur infra-rouge 20a, par exemple en aluminium poli, est interposé entre le dispositif 20 et le fond de la cuve 14 et chargé de renvoyer le flux thermique en direction du bouclier 10.

Un tel dispositif 20 peut être un dispositif conventionnel constitué à partir par exemple de tubes infra-rouge répartis de manière appropriée, ou de résistances en graphite dont on aménagera en conséquence la forme et la disposition, en vue d'obtenir le mode de répartition du flux thermique désiré. De tels systèmes de chauffage à géométrie appropriée sont à la portée du technicien du métier et n'ont pas besoin d'être décrits plus en détails.

L'intérieur de la cuve 14 peut être mis en pression à l'aide d'un fluide approprié, par exemple de l'azote, introduit par une canalisation 21 et reliée à une source appropriée (non représentée) via une vanne de régulation 22 pilotée par un micro-processeur 23 de conduite des essais, également relié au dispositif de chauffage 20 ainsi qu'à une sonde de pression 24 disposée à l'intérieur de la cuve 14.

Au dessus de la cuve et de la poutre 16 est disposée une hotte 25 de récupération des gaz et fumées échappés (flèches 26) de la cuve par l'intervalle de fuite 19.

La hotte 25 est reliée à une canalisation d'évacuation 27 équipée d'un extracteur 28.

Le fonctionnement du dispositif ci-dessus décrit est le suivant.

Le bouclier 10 fait office de couvercle de la cuve sous pression et reçoit donc sur sa face externe convexe une pression qui est régulée par le micro-processeur 23 en fonction des variations de pression prévues par l'essai à réaliser, alors que la face interne concave 10a est à la pression atmosphérique.

Il s'établit alors entre les faces du bouclier 10 un différentiel de pression contrôlé et modulé qui va, du fait du mode de fixation du bouclier 10, le soumettre à des contraintes mécaniques, en particulier un débattement de la périphérie, analogues à celles réellement vécues par un bouclier en situation de rentrée dans l'atmosphère terrestre, comme illustré par la figure 1, du fait que le bord périphérique du bouclier n'est ni encastré dans la paroi de la cuve ni même bridé dans son déplacement, la pièce annulaire 17 étant sans aucun contact, à aucun moment, avec le bouclier.

Suivant un autre avantage, on conserve une section de fuite (intervalle 19) constante, en dépit des mouvements de déflexion du bord périphérique 13 du bouclier, ce qui permet de bien contrôler l'évolution de la pression réelle à l'intérieur de la cuve 14.

Si, pour une raison ou une autre, la pression instantanée détectée par la sonde 24 à l'intérieur de la cuve 14 n'était pas égale, aux tolérances près, à celle affichée par le programme d'essai mis en oeuvre par le micro-processeur 23, ce dernier commanderait par la vanne 22 une correction en conséquence, dans un sens ou dans l'autre.

Simultanément à la mise en pression de la cuve et à l'accomplissement du programme de variations de pressions, le dispositif de chauffage 20 est mis en service et régulé d'une manière analogue par le micro-processeur 23, en fonction du programme d'essais.

Le dispositif d'essai est conçu pour soumettre la pièce à tester par exemple à des températures pouvant atteindre ou dépasser 1200°C pendant une centaine de secondes et avec des surpressions sur la face 1a par rapport à la face 1b de l'ordre d'un dixième de bar.

Au cours des essais, les éventuels gaz et fumées engendrés par les sollicitations thermiques sur le matériau du bouclier, en particulier les gaz de combustion et les produits de dégazage des protections thermiques du bouclier, sont évacués au fur et à mesure par l'intervalle de fuite 19 qui est de l'ordre de quelques millimètres et récupérés par la hotte aspirante 25.

Les éléments chauffants du dispositif 20 sont avantageusement réalisés d'une façon modulaire pour obtenir une disposition géométrique particulière afin d'approcher au mieux la courbe de répartition de densité du flux thermique (non linéaire) en fonction de l'abscisse curviligne et pour permettre de récupérer les modules pour des essais ultérieurs mettant en oeuvre des flux différents, notamment des flux plus faibles.

La pièce annulaire 17 permet d'obtenir une surpression interne par écoulement de fluide facilement contrôlable grâce à sa forme, en particulier la face 18, adaptée à la déformation du bouclier 10 soumis aux conditions thermomécaniques.

Les dimensions et formes de la pièce 17 sont calculées en fonction des débattements possibles du bouclier.

La cuve 14 peut recevoir des boucliers 10 de différents diamètres, il suffit d'adapter en conséquence la pièce annulaire 17.

Le contrôle des fuites est assuré dans le mode de réalisation de la figure 2, par la nature et la géométrie particulière de la pièce annulaire amovible 17, mais on pourrait éventuellement assurer un tel contrôle sans la pièce 17, le bord du bouclier se déplaçant en regard de la paroi interne verticale de la cuve.

Il conviendrait alors d'agir sur l'envoi de gaz dans un sens ou dans l'autre dans la cuve, par l'intermédiaire d'une boucle d'auto-régulation gérée par le micro-processeur 23. Cependant, les inconvénients d'un tel processus résident dans la nécessité, notamment pour des boucliers de diamètre important, d'avoir une source de gaz de mise en pression de forte capacité et dans les temps de réponse d'un tel système pour conserver un contrôle précis des variations de la pression réelle à l'intérieur de la cuve.

L'invention s'applique à des boucliers à bord circulaire ou non, de forme plus ou moins cintrée, ainsi qu'à toute pièce ou structure de formes et dimensions variables nécessitant de semblables simulations des conditions thermomécaniques de pénétration dans une atmosphère et susceptible d'être mise en place convenablement dans une cuve telle que celle illustrée en figure 2, au lieu et place du bouclier.

Enfin, l'invention n'est évidemment pas limitée au mode de réalisation représenté et décrit ci-dessus, mais en couvre au contraire toutes les variantes, notamment en ce qui concerne les formes, dimensions et agencement de la pièce en forme de coin annulaire 17 qui peut être remplacée par exemple par une pièce mobile liée au bord du bouclier et en contact avec la cuve (14,15) tout en ménageant, entre elle et le bouclier ou entre elle et la cuve, un intervalle de fuite de section sensiblement constante.

**Revendications**

1. Procédé d'essai thermomécanique par simulation d'un bouclier thermique (10), caractérisé en ce qu'il consiste :

   - à agencer le bouclier en sorte de constituer par sa face externe convexe (10a) une partie de la paroi interne d'une enceinte fermée (14,15), en laissant un intervalle libre (19) entre le bord périphérique (13) dudit bouclier (10) et la partie environnante en regard de l'enceinte (15),

- à solidariser le bouclier de l'enceinte par un moyen (16) relié au bouclier par sa face interne (10b), dans sa partie centrale,
- à envoyer dans l'enceinte (14,15) un fluide sous pression contrôlée,
- à appliquer simultanément sur la face externe convexe (10a) du bouclier un flux thermique contrôlé, évolutif le long de l'abscisse curviligne, et
- à commander l'évolution dans le temps de la pression dudit fluide et les variations en puissance et dans le temps dudit flux thermique en fonction d'un programme pré-établi.

2. Procédé suivant la revendication 1, caractérisé en ce que durant toute la durée du programme d'essai, on contrôle les fuites au droit dudit intervalle (19) entre bouclier (10) et enceinte (14,15), à des fins de contrôle de la pression effective dans l'enceinte.

3. Procédé suivant la revendication 2, caractérisé en ce le contrôle desdites fuites est opéré par une détection d'écart entre la pression instantanée de consigne et la pression réelle dans l'enceinte (14,15) et une action sur le débit du fluide en vue de ramener ledit écart en deçà d'un seuil prédéterminé.

4. Procédé suivant la revendication 2, caractérisé en ce que le contrôle desdites fuites est opéré en agençant entre le bord périphérique (13) du bouclier (10) et la partie environnante en regard de l'enceinte (15), un moyen (17) apte à conserver une section de fuite sensiblement constante au droit dudit bord périphérique (17) en dépit du mouvement de débattement de ce dernier.

5. Dispositif pour la mise en oeuvre du procédé selon la revendication 1, caractérisé en ce qu'il est constitué :

- d'une cuve (14,15) ouverte à sa partie supérieure,
- d'un moyen (16) de support et positionnement du bouclier à tester (10), en sorte d'obturer la partie ouverte de la cuve par le bouclier avec sa face externe convexe tournée vers l'intérieur de la cuve, tout en ménageant entre cette dernière et le bord périphérique (13) du bouclier (10) un intervalle de fuite (19),
- de moyens (21,22) d'introduction dans la cuve (14,15) dudit fluide sous pression contrôlée,
- de moyens (20) pour appliquer dans la cuve (14,15), sur la face externe convexe (1a) du bouclier (10), ledit flux thermique, et
- de moyens (23,24) pour commander et contrôler l'évolution desdits fluide et flux thermique en fonction d'un programme pré-établi.

6. Dispositif suivant la revendication 5, caractérisé en ce que ledit moyen (16) de support et positionnement est une poutre extérieure à la cuve (14,15), reliée à cette dernière ainsi qu'au bouclier, du côté de sa face interne concave (10b) et dans la partie centrale.

7. Dispositif suivant la revendication 5 ou 6, caractérisé en ce qu'entre le bord périphérique (13) du bouclier (10) et la cuve (14,15) est disposée une pièce annulaire (17) agencée en sorte de ménager une section de fuite sensiblement constante entre le bouclier et la cuve, quelles que soient les déformations dudit bord périphérique (13).

8. Dispositif suivant la revendication 7, caractérisé en ce que ladite pièce (17) a une forme de coin, est montée de manière fixe et réglable sur la cuve (14,15) et présente en regard dudit bord périphérique (13) du bouclier (10) une face concave dont la distance vis à vis dudit bord périphérique est sensiblement constante.

9. Dispositif suivant la revendication 7 ou 8, caractérisé en ce que ladite pièce annulaire (17) est montée sur une virole (15) fixée de manière amovible sur la cuve (14) et constituant une partie de celle-ci.

10. Dispositif suivant l'une des revendications 5 à 9, caractérisé en ce qu'au droit dudit intervalle de fuite (19) est disposée une hotte aspirante (25, 27, 28).

**Patentansprüche**

1. Verfahren zur thermomechanischen Prüfung durch Simulation eines Hitzeschildes (10), dadurch gekennzeichnet, daß es darin besteht,

- den Schild derart anzuordnen, daß durch seine konvexe Außenfläche (10a) ein Teil der Innenwand eines geschlossenen Behälters (14, 15) gebildet wird, wobei ein Freiraum (19) zwischen dem Umfangsrand (13) des Schildes (10) und dem umgebenden Abschnitt in bezug auf den Behälter (15) belassen wird,
- den Schild mit dem Behälter durch ein mit dem Schild über dessen Innenseite (10b) verbundenes Mittel (16) in seinem zentralen Teil zu befestigen,
- in den Behälter (14, 15) ein unter kontrolliertem Druck stehendes Fluid zu geben,
- gleichzeitig die konvexe Außenfläche (10a) des Schildes mit einem kontrollierten Wärmefluß, der sich längs der gekrümmten Abszisse entwickelt, zu beaufschlagen,

- die zeitliche Entwicklung des Fluiddrucks und die Leistungsänderungen und während der Zeit des Wärmeflusses als Funktion eines vorerstellten Programms zu kontrollieren.

2. Verfahren nach Anspruch 1, dadurch gekennzeichnet, daß man während der gesamten Versuchsprogrammdauer die Leckage am Freiraum (19) zwischen Schild (10) und Behälter (14, 15) zum Kontrollieren des effektiven Drucks in dem Behälter kontrolliert.

3. Verfahren nach Anspruch 2, dadurch gekennzeichnet, daß die Kontrolle der Leckage durch eine Detektion des Abstands zwischen dem momentanen Einstelldruck und dem tatsächlichen Druck in dem Behälter (14, 15) und einer Wirkung auf den Fluidverlust vorgenommen wird, um den Abstand unter einer vorbestimmten Schwelle zu halten.

4. Verfahren nach Anspruch 2, dadurch gekennzeichnet, daß die Kontrolle der Verluste vorgenommen wird, indem zwischen dem Umfangsrand (13) des Schildes (10) und dem in bezug auf den Behälter (15) umgebenden Bereich ein Mittel (17) angeordnet wird, das geeignet ist, einen im wesentlichen konstanten Leckagequerschnitt am Umfangsrand (13) trotz der Verschiebung des letzteren aufrechtzuerhalten.

5. Vorrichtung zur Durchführung des Verfahrens nach Anspruch 1, dadurch gekennzeichnet, daß sie gebildet wird aus

   - einer im oberen Teil offenen Wanne (14, 15),
   - einem Mittel (16) zum Tragen und Positionieren des zu prüfenden Schildes (10) derart, daß der offene Teil der Wanne durch den Schild mit seiner konvexen Außenfläche dem Innern der Wanne zugekehrt abgedeckt wird, wobei zwischen dieser letzteren und dem Umfangsrand (13) des Schildes (10) ein Freiraum (19) angeordnet ist,
   - Mitteln (21, 22) zum Einführen des unter kontrolliertem Druck stehenden Fluids in die Wanne (14, 15),
   - Mitteln (20) zum Anlegen des Wärmeflußes in die Wanne (14, 15) auf die äußere konvexe Fläche (10a) des Schildes (10) und
   - Mitteln (23, 24) zum Steuern und Kontrollieren der Entwicklung des Fluids und des Wärmflusses als Funktion eines vorerstellten Programms.

6. Vorrichtung nach Anspruch 5, dadurch gekennzeichnet, daß das Mittel (16) zum Tragen und Positionieren ein Träger außerhalb der Wanne (14, 15) ist, der mit dieser ebenso wie mit dem Schild, mit diesem an der konkaven Innenseite (10b) und in seinem mittleren Teil, verbunden ist.

7. Vorrichtung nach Anspruch 5 oder 6, dadurch gekennzeichnet, daß zwischen dem Umfangsrand (13) des Schildes (10) und der Wanne (14, 15) ein ringförmiges Teil (17) angeordnet ist, das dazu dient, einen im wesentlichen konstanten Leckagequerschnitt zwischen dem Schild und der Wanne vorzusehen, wie auch die Deformationen des Umfangsrandes (13) sind.

8. Vorrichtung nach Anspruch 7, dadurch gekennzeichnet, daß das Teil (17) die Form eines Keils besitzt, fest und einstellbar auf der Wanne (14, 15) montiert ist und in bezug auf den Umfangsrand (13) des Schildes (10) eine konkave Fläche besitzt, deren Abstand gegenüber dem Umfangsrand im wesentlichen konstant ist.

9. Vorrichtung nach Anspruch 7 oder 8, dadurch gekennzeichnet, daß das ringförmige Teil (17) auf einem Ring (15) in bezug auf die Wanne (14) lösbar befestigt ist und einen Teil hiervon bildet.

10. Vorrichtung nach einem der Ansprüche 5 bis 9, dadurch gekennzeichnet, daß im Freiraum (19) ein Saugabzug (25, 27, 28) angeordnet ist.

**Claims**

1. Thermomechanical test method by simulating a thermal shield (10), characterised in that it consists of:

   - arranging the shield so as to constitute, by means of its convex external face (10a), a part of the internal wall of a closed chamber (14, 15), leaving a free gap (19) between the peripheral edge (13) of the said shield (10) and the opposite surrounding part of the chamber (15),

   - fixing the shield to the chamber by a means (16) connected to the shield by its internal face (10b), in its central part,

   - sending a fluid under controlled pressure into the chamber (14, 15),

   - simultaneously applying to the convex external face (10a) of the shield a controlled heat flux, evolutive along the curved x-axis, and

   - controlling the change over time of the pressure of the said fluid and the variations in power over time of the said heat flux according to a pre-established programme.

**2.** Method according to Claim 1, characterised in that, throughout the period of the test programme, any leakages in line with the said gap (19) between the shield (10) and the chamber (14, 15) are monitored for the purpose of monitoring the effective pressure in the chamber.

**3.** Method according to Claim 2, characterised in that the said leakages are monitored by detecting any difference between the reference instantaneous pressure and the actual pressure in the chamber (14, 15), and acting on the said flow of fluid with a view to bringing the said difference below a predetermined threshold.

**4.** Method according to Claim 2, characterised in that the said leakages are controlled by arranging, between the peripheral edge (13) of the shield (10) and the opposite surrounding part of the chamber (15), a means (17) suitable for keeping a substantially constant cross section of leakage in line with the said peripheral edge (13) in spite of the deflection movement of the latter.

**5.** Device for implementing the method according to Claim 1, characterised in that it consists of:

- a tank (14, 15) open at its top part,

- a means (16) of supporting and positioning the shield to be tested (10), so as to close off the open part of the tank by means of the shield with its convex external face turned towards the inside of the tank, whilst forming between the latter and the peripheral edge (13) of the shield (10) a leakage gap (19),

- means (21, 22) of introducing the said fluid under controlled pressure into the tank (14, 15),

- means (20) for applying in the tank (14, 15), on the convex external face (10a) of the shield (10), the said heat flux, and

- means (23, 24) for controlling and monitoring the changes in the said fluid and heat flux according to a pre-established programme.

**6.** Device according to Claim 5, characterised in that the said support and positioning means (16) is a beam external to the tank (14, 15), connected to the latter and to the shield, on the same side as its concave internal face (10b) and in the central part.

**7.** Device according to Claim 5 or 6, characterised in that, between the peripheral edge (13) of the shield (10) and the tank (14, 15), there is disposed an annular piece (17) arranged so as to form a substantially constant leakage cross section between the shield and the tank, whatever the deformations of the said peripheral edge (13).

**8.** Device according to Claim 7, characterised in that the said piece (17) is wedge shaped, is mounted fixedly and adjustably on the tank (14, 15) and has opposite the said peripheral edge (13) of the shield (10), a concave face whose distance with respect to the said peripheral edge is substantially constant.

**9.** Device according to Claim 7 or 8, characterised in that the said annular piece (17) is mounted on a ferrule (15) removably fixed to the tank (14) and constituting a part thereof.

**10.** Device according to one of Claims 5 to 9, characterised in that, in line with the said leakage gap (19), a suction hood (25, 27, 28) is disposed.

FIG.1.

FIG.2.